# EUROPÄISCHE PATENTSCHRIFT

(11) **EP 1 111 987 B1**
(45) Veröffentlichungstag und Bekanntmachung des Hinweises auf die Patenterteilung: **02.05.2003**
(21) Anmeldenummer: 99955680.6
(22) Anmeldetag: 07.09.1999
(51) Int. Cl.: A01G 1/00

(54) **FERTIGRASEN**
READYMADE LAWN
GAZON PRECULTIVE

(30) Priorität: 09.09.1998 DE 29816167 U
(43) Veröffentlichungstag der Anmeldung: 04.07.2001
(73) Patentinhaber: Behrens, Wolfgang, 27243 Gross Ippener (DE)
(72) Erfinder: Behrens, Wolfgang, 27243 Gross Ippener (DE)
(74) Vertreter: Thömen, Uwe, Dipl.-Ing.
(86) Internationale Anmeldenummer: DE9902900
(87) Internationale Veröffentlichungsnummer: WO00013483

(56) Entgegenhaltungen:
- DE-A- 19 725 403
- DE-U- 8 231 033
- DE-U- 29 712 457
- DE-U- 29 816 167
- FR-A- 2 657 364

## Beschreibung

Die Erfindung betrifft einen Fertigrasen mit einer Schicht aus Erde, Substraten und dergleichen, in welcher Rasensaat eingebracht ist.

Fertigrasen sind Rasenstücke, welche mit einer Spezialmaschine oder von Hand von einer mineralischen Grundschicht abgehoben und an anderer Stelle zur Begrünung aufgelegt werden. Derartige Fertigrasen werden beispielsweise bei der Anlage oder der Erneuerung von Sportplätzen verwendet. Übliche Fertigrasen werden mit einem Rasensodenschneider gewonnen, wobei sich Schälbreiten von 30 und 40 cm und Sodenlängen bis 2,5 m durchgesetzt haben. Hierbei werden die Soden durch die Wurzeln der für den Fertigrasen verwendeten Gräser zusammengehalten.

Der Zusammenhalt der Rasensoden allein durch die Wurzeln der Gräser erlaubt nur eine relativ geringe Schälbreite und eine ebenso relativ geringe Sodenlänge. Bei größeren Breiten bzw. Längen besteht die Gefahr, daß die Sodenstücke und -bahnen durch ihr Eigengewicht auseinanderbrechen und auseinanderfallen würden. Zur Gewinnung von Fertigrasenbahnen mit einer größeren Breite und Länge ist schon vorgeschlagen worden, beispielsweise im deutschen Gebrauchsmuster DE-U-82 31 033.5, zwischen der Schicht aus Erde, Substraten und dergleichen, in welche die Rasensaat eingebracht wird, eine netzartige Struktur zu verlegen. Beim Schälen und Aufrollen der Fertigrasensoden wird diese neztartige Struktur mit aufgerollt und auch mit verlegt. Durch die netzartige Struktur wird die Stabilität und Haltbarkeit der Fertigrasensodenbahnen erhöht, wodurch sich größere Schälbreiten und Schällängen realisieren lassen.

Die netzartige Struktur, welche beim Verlegen des Fertigrasens zwangsläufig ebenfalls mit verlegt werden muß, birgt jedoch gewisse Risiken. Da zwischen der netzartigen Struktur und der Grasnarbe nur ein Abstand von etwa 1 cm - 2 cm besteht, kann die netzartige Struktur bei längerer Nutzungsdauer des Fertigrasens, d. h., bei länger anhaltender Trittbeanspruchung, an die Oberfläche gelangen. Hier besteht die große Gefahr, insbesondere wenn der Fertigrasen auf Sportplätzen verlegt wird, daß sich Nutzer des Fertigrasens mit ihren Schuhen in der netzartigen Struktur verhaken. Dadurch stellt die netzartige Struktur ein nicht unerhebliches Unfallrisiko dar.

Zwar besteht die netzartige Struktur gemäß der DE-G 82 31 033.5 aus Holzwolle, welche relativ schnell verrottet und nach der Verrottung im Gegensatz zu ebenfalls bekannten netzartigen Strukturen aus unverrottbaren Kunststoffen kein unfallträchtiges Hindernis mehr darstellt, jedoch dauert der Verrottungsprozeß oftmals zu lange, um die Unfallgefahr zumindest in den ersten Monaten nach dem Verlegen des Fertigrasens sicher ausschließen zu können.

Hier setzt die Erfindung ein, deren Aufgabe es ist, einen Fertigrasen der eingangs genannten Art zu schaffen, welcher möglichst große Schälbreiten und Schällängen ermöglicht und welcher gleichzeitig eine Unfallgefahr für den Fertigrasen betretende Personen sicher ausschließt.

Diese Aufgabe wird mit einem Fertigrasen der eingangs genannten Art gelöst, welcher die Merkmale des Patentanspruchs 1 aufweist. Erfindungsgemäß ist vorgesehen, daß in die Schicht unverbundene Verstärkungselemente eingebracht und in der Schicht diskret verteilt sind, wobei die Verstärkungselemente jeweils faserige Elemente mit einer Länge von 2 10 cm und mit einer Dicke von 1 - 10 mm sind, wobei die faserigen Elemente jeweils aus einem pflanzlichen Rohstoff bestehen und innerhalb eines Zeitraumes von 3 - 36 Monaten durch in der Schicht stattfindende natürliche Zersetzungsprozesse vollständig abbaubar sind.

Der Erfindung liegt die überraschende Erkenntnis zugrunde, daß sich die zum Schälen und zum Verlegen des Fertigrasens nötige Verstärkung auch durch relativ kurze, nicht miteinander verbundene faserige Elemente erreichen läßt. Da diese faserigen Elemente nicht miteinander verbunden und diskret in der Schicht verteilt sind, weisen diese faserigen Elemente nicht den Nachteil von netzartigen Strukturen auf, daß die Nutzer des Fertigrasens mit ihren Schuhspitzen in diese nur zum Schälen und zum Verlegen benötigte Verstärkungsschicht einfädeln könnten.

Als besonderer Vorteil der Erfindung ist anzusehen, daß die faserigen Elemente diskret in der Schicht verteilt sind, und nicht, wie bislang üblich, von der Schicht scharf getrennt sind. Hierdurch ergibt sich bei der Herstellung des Fertigrasens eine Zeiteinsparung. Denn bislang mußte eine netzartige Struktur auf den Boden aufgebracht werden, wonach die Schicht und die Grassamen des Fertigrasens erst auf diese netzartige Struktur aufgebracht wurden. Hier waren also bislang zwei Arbeitsschritte nötig. Die faserigen Elemente gemäß der Erfindung erlauben es jedoch, die Schicht aus Erde, Substraten und anderen Beimengungen, zusammen mit den Grassamen des Fertigrasens und den faserigen Elementen, welche die Verstärkungselemente darstellen, aufzubringen. Hierdurch ergibt sich eine deutliche Arbeitserleichterung und eine Zeitersparnis gegenüber bislang bekannten Vorgehensweisen.

Die faserigen Elemente selbst werden, wie ausgeführt, nur beim Schälen und beim Verlegen des Fertigrasens benötigt. Ein längerer Verbleib der faserigen Elemente nach dem Verlegen des Fertigrasens ist daher nicht nötig. Hier macht sich die Erfindung die in der Schicht stattfindenden natürlichen Zersetzungsprozesse insofern zu Nutze, als daß für die faserigen Elemente solche verwendet werden, welche aus pflanzlichen Rohstoffen bestehen. In praktischen Ausführungsformen der Erfindung ist vorgesehen, daß die faserigen Elemente aus Kokosfasern, aus Flachs oder aus Hanf bestehen. Hierbei können sich die faserigen Elemente als bindfadenartige Stücke darstellen. Derartige faserige Elemente aus Faserbündeln bieten zudem den Vorteil, daß sie zum Aufspleißen bzw. zum Zerfasern neigen. Dies ist insofern von Vorteil, als daß die aus den Grassamen entstehenden Wurzeln der Gräser in die Zwischenräume der faserigen Elemente eindringen und nicht nur um die faserigen Elemente herumwinden. Das Auffasern der faserigen Elemente schafft also einen zusätzlichen Halt und daher eine zusätzliche Stabilität des gesamten Fertigrasens.

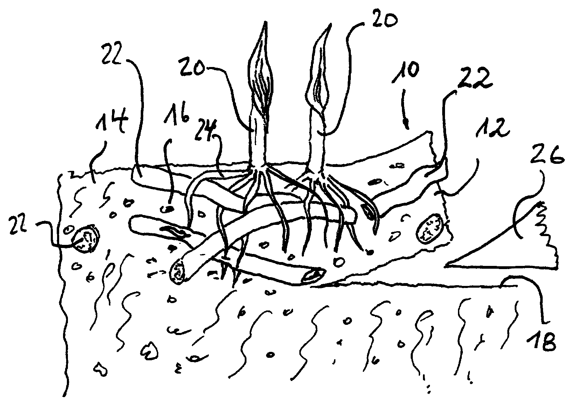

Weitere Vorteile und Ausgestaltungen werden anhand der Zeichnung und der Beschreibung, welche ein bevorzugtes Ausführungsbeispiel der Erfindung darstellen, und anhand der Patentansprüche näher beschrieben.

In der Zeichnung ist ein bevorzugtes Ausführungsbeispiel eines erfindungsgemäßen Fertigrasens 10 dargestellt. Der Fertigrasen 10 weist eine Schicht 12 auf, welche aus einem Gemisch aus Erde 14, Substratpartikeln 16 und aus nicht näher dargestellter Rasensaat besteht. Die Schicht 12 ist entweder auf einer Fläche eines mineralischen Bodens 18 aufgebracht oder besteht selbst aus diesem mineralischen Boden 18.

Wie in der Zeichnung angedeutet, sind bereits aus der Rasensaat Pflänzchen 20 entstanden, welche den eigentlichen Rasen darstellen. In die Schicht 12 sind faserige Elemente 22 eingearbeitet worden, welche der Verstärkung des Fertigrasens 10 dienen. Die faserigen Elemente 22 stellen sich im Ausführungsbeispiel als bindfadenartige Stücke aus Kokosfaser dar. Wie in der Zeichnung angedeutet, winden sich Wurzeln 24 der Pflänzchen 20 um die faserigen Elemente 22 bzw. dringen durch die faserigen Elemente 22 hindurch. In Verbindung mit den Wurzeln 24 gewährleisten die faserigen Elemente 22 einen Zusammenhalt des Fertigrasens 10, welcher groß genug ist, daß beim Schälen des Fertigrasens 10 mittels eines nur angedeuteten Schälwerkzeuges 26 der Fertigrasen 10 auch bei einer Schälbreite von über 30 cm und einer Länge des Fertigrasens von über 2,5 m nicht auseinanderfallen oder auseinanderbrechen kann.

## Patentansprüche

1. Fertigrasen (10) mit einer Schicht (12) aus Erde (14), Substraten (16) und dergleichen, in welcher Rasensaat eingebracht ist, **dadurch gekennzeichnet, daß** in die Schicht (12) unverbundene Verstärkungselemente (22) eingebracht und in der Schicht (12) diskret verteilt sind, wobei die Verstärkungselemente (22) jeweils faserige Elemente (22) mit einer Länge von 2 - 10 cm und mit einer Dicke von 1 - 10 mm sind, wobei die faserigen Elemente (22) jeweils aus einem pflanzlichen Rohstoff bestehen und innerhalb eines Zeitraums von 3 - 36 Monaten durch in der Schicht (12) stattfindende natürliche Zersetzungsprozesse vollständig abbaubar sind.

2. Fertigrasen (10) nach Anspruch 1, **dadurch gekennzeichnet, daß** die faserigen Elemente (22) aus Kokosfasern bestehen.

3. Fertigrasen (10) nach Anspruch 1, **dadurch gekennzeichnet, daß** die faserigen Elemente (22) aus Flachs bestehen.

4. Fertigrasen (10) nach Anspruch 1, **dadurch gekennzeichnet, daß** die faserigen Elemente (22) aus Hanf bestehen.

## Claims

1. Turf (10) with a layer (12) of soil (14), substrates (16) and similar in which grass seed is introduced, **characterised in that** unconnected reinforcing elements (22) are placed in the layer (12) and distributed discretely in the layer (12), where the reinforcing elements (22) are fibrous elements (22) with a length of 2 - 10 cm and thickness of 1 - 10 mm, where the fibrous elements (22) each consist of a vegetable raw material and can be decomposed completely within a period of 3 - 36 months by the natural decomposition process taking place in the layer (12).

2. Turf (10) according to claim 1, **characterised in that** the fibrous elements (22) consist of coconut fibres.

3. Turf (10) according to claim 1, **characterised in that** the fibrous elements (22) consist of flax.

4. Turf (10) according to claim 1, **characterised in that** the fibrous elements (22) consist of hemp.

## Revendications

1. Gazon fini (10) comportant une couché (12) composée de terre (14), de substrats (16) et similaires, à laquelle des semences de gazon ont été incorporées, **caractérisé en ce que** des éléments de renfort non reliés (22) ont été introduits et discrètement répartis dans la couche (12), les éléments de renforts (22) étant respectivement des éléments fibreux (22) d'une longueur comprise entre 2 et 10 cm et d'une épaisseur comprise entre 1 et 10 mm, les éléments fibreux (22) étant respectivement en matière première végétale et entièrement dégradables dans un délai de 3 à 36 mois par des processus de décomposition naturels qui se déroulent dans la couche (12).

2. Gazon fini (10) suivant la revendication 1, **caractérisé en ce que** les éléments fibreux (22) sont des fibres de coco.

3. Gazon fini (10) suivant la revendication 1, **caractérisé en ce que** les éléments fibreux (22) sont en lin.

4. Gazon fini (10) suivant la revendication 1, **caractérisé en ce que** les éléments fibreux (22) sont en chanvre.
